# EUROPEAN PATENT SPECIFICATION

(11) **EP 2 911 331 B1**
(45) Date of publication and mention of the grant of the patent: **26.12.2018**
(21) Application number: 14305257.9
(22) Date of filing: 25.02.2014
(51) Int. Cl.: H04L 1/00

(54) **Apparatus, method and computer program for controlling a transmission format, remote unit and central unit of a base station transceiver**
Vorrichtung, Verfahren und Computerprogramm zum Steuern eines Übertragungsformats, Fernbedienungsteil und Zentraleinheit eines Basisstations-Senders-/-empfängers
Appareil, procédé et programme informatique pour commander un format de transmission, unité à distance et unité centrale d'un émetteur-récepteur de station de base

(43) Date of publication of application: 26.08.2015
(73) Proprietor: Alcatel Lucent, 91620 Nozay (FR)
(72) Inventor: Schaich, Frank, 70435 Stuttgart (DE); Doetsch, Uwe, 70435 Stuttgart (DE)
(74) Representative: Nokia EPO representatives

(56) References cited:
- US-B1- 6 404 755
- UWE DÖTSCH ET AL: "Quantitative Analysis of Split Base Station Processing and Determination of Advantageous Architectures for LTE", BELL LABS TECHNICAL JOURNAL, vol. 18, no. 1, 30 May 2013 (2013-05-30), pages 105-128, XP055124344, ISSN: 1089-7089, DOI: 10.1002/bltj.21595
- ZTE: "Discussion of UL-MIMO Enhancement for LTE Rel-11", 3GPP DRAFT; R1-112589 DISCUSSION OF UL-MIMO ENHANCEMENT FOR LTE REL-11, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20110822, 16 August 2011 (2011-08-16), XP050537662, [retrieved on 2011-08-16]

## Description

### Technical Field

Embodiments of the present invention relate to an apparatus, a method and a computer program for controlling a transmission format, and embodiments relate to a remote unit and a central unit of a base station transceiver, more particularly but not exclusively to determining efficient transmission formats for a link between a remote unit and a central unit of a distributed base station transceiver.

### Background

This section introduces aspects that may be helpful in facilitating a better understanding of the invention(s). Accordingly, the statements of this section are to be read in this light and are not to be understood as admissions about what is in the prior art or what is not in the prior art.

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. The mobile communication infrastructure becomes more and more dense.

One option in the discussion of the evaluation of current and future mobile network architectures is centralization. Several solutions with different degrees of centralization are under investigation. A promising architecture for operators (with at least sufficient resources for data transport with low latency and high data rates) may be a centralization of all Radio Access Network (RAN) processing (for example Layer1) capabilities. A base station transceiver in wireless communication systems like the Universal Mobile Telecommunication System (UMTS) and Long Term Evolution (LTE) systems may be split in two separate units, a Remote Unit (RU), which is also referred to as Remote Radio Head (RRH), and a Central Unit (CU), which is also referred to as base band unit (BBU), connected using electrical or optical links through a backhaul network. The approach whereby a Remote Radio Head (RRH) is connected over a Common Public Radio Interface (CPRI) link with a base band unit (BBU) at the central office may use a large constant data rate with very low latency.

A quantitative analysis of split base station processing and determination of advantageous architectures; Uwe Dotsch et al.; Bell Labs Technical Journal 18(1), 105-128 (2013) ©2013 Alcatel-Lucent. Published by Wiley Periodicals, Inc.; Published online in Wiley Online Library (wileyonlinelibrary.com) • DOI: 10.1002/bltj.21595, teaches a centralization of the baseband processing in radio access networks to reduce radio site operations costs, reduce capital costs, and ease implementation of multi-site coordination mechanisms such as coordinated multipoint transmission and reception (CoMP). Further alternative interfacing options between central and remote units are identified.

### Summary of illustrative Embodiments

The scope of protection of the present invention is defined by the appended claims 1-12. In the following description, any embodiment(s) referred to and not falling within the scope of the appended claims, is (are) merely example(s) useful to the understanding of the invention. Some simplifications may be made in the following summary, which is intended to highlight and introduce some aspects of the various exemplary embodiments, but such simplifications are not intended to limit the scope of the inventions. Detailed descriptions of a preferred exemplary embodiment adequate to allow those of ordinary skill in the art to make and use the inventive concepts will follow in later sections.

Various embodiments provide an apparatus, a method and a computer program for controlling a transmission format, and embodiments provide a remote unit and a central unit of a base station transceiver. Embodiments may provide an efficient concept for data rate adaption between a remote unit and a central unit of a base station transceiver making efficient use of the link capacity between the remote unit and the central unit while controlling or avoiding performance losses.

Embodiments provide an apparatus which is operable to control a transmission format on a communication link between a remote unit and a central unit of a base station transceiver of a mobile communication system. The apparatus comprises a control module, which is operable to determine information related to a property of data to be communicated between the remote unit and the central unit. The control module is further operable to determine information related to a transmission format based on the information related to the property of the data. The apparatus further comprises an interface which is operable to provide the information related to the transmission format. Embodiments may enable an adaption of the required data rate between the remote unit and central unit with controlled, reduced or even without performance losses. Further, embodiments may enable reducing the required data rate per link and improving the multiplexing gain for sending Inphase/Quadrature (I/Q) samples for several cells over the same physical link between the remote and central units.

The apparatus may further comprise a processing module. The processing module may be coupled to the interface. The processing module may be operable to communicate the data between the remote unit and the central unit based on the information on the transmission format. Embodiments may provide the advantage that the processing module may communicate the data based on the information related to the transmission format provided by the interface from the remote unit to the central unit or in the opposite direction.

The control module may be operable to determine information related to a first or a second modulation order of the data as information related to the property of the data. The first modulation order may be lower than the second modulation order. The control module may be operable to determine information related to a first transmission format when information related to the first modulation order is determined. The control module may further be operable to determine information related to a second transmission format when information related to the second modulation is determined. The information related to the first transmission format may indicate a lower resolution for samples communicated between the remote unit and the central unit than the information related to the second transmission format. Embodiments may provide adapted sample resolution based on a modulation order or scheme used for data communicated between the remote unit and the central unit.

Further the control module may be operable to determine, as information related to the data property, whether the data to be communicated between the remote unit and the central unit corresponds to payload data or control data. In some embodiments the control module may be operable to determine information related to different transmission formats based on whether the data corresponds to payload data or control data. Embodiments may enable transmission format adaptation on a link between the remote unit and the central unit of a base station transceiver based on a significance on the communicated data, e.g. whether payload or control data is communicated.

In some embodiments the first modulation order may correspond to Quaternary Phase Shift Keying (QPSK). The second modulation order may correspond to 64 Quadrature Amplitude Modulation (64QAM). In some embodiments the first and second transmission formats may correspond to different quantization granularities of samples of data. In some embodiments the first and second transmission formats may differ by at least one bit per quantized sample. Embodiments may enable adapted sample resolution based on a modulation order or scheme used for the data communicated between the remote unit and the central unit.

In some embodiments the control module may be operable to determine, as information related to the data property, information related to a target quality to be achieved for the data to be communicated between the remote unit and the central unit. In some embodiments the control module may be operable to determine information related to different transmission formats based on the information related to the quality to be achieved. For example, different transmission formats may allow different error rates depending on the target quality to be achieved for the data. Embodiments may provide an appropriate adaption of the required data rate between the remote unit and central unit based on the target quality to be achieved.

In further embodiments the control module may be operable to determine, as information related to the data property, information related to a Quality of Service (QoS) to be achieved for the data to be communicated between the remote unit and the central unit. In some embodiments the control module may be operable to determine information related to different transmission formats based on the information related to the quality of service. Embodiments may provide improved efficiency of the communication link between the remote unit and the central unit depending on the quality of service to be achieved by the data communicated, wherein a certain failure rate may be allowable or tolerable depending on the quality of service to be achieved.

In some embodiments the control module may be operable to determine information related to a load or an available bandwidth of the communication link between the remote unit and the central unit. In some embodiments the control module may be operable to determine information related to different transmission formats based on the information related to the load or the available bandwidth. Embodiments may provide improved usage of the available bandwidth depending on the load of the communication link between the remote unit and the central unit.

In further embodiments the control module may further be operable to communicate with a data scheduler of the base station transceiver. Further, the control module may be operable to provide information related to a modulation order restriction if an overload situation is determined on the communication link between the remote unit and the central unit.

Embodiments may enable coordination with a scheduler of the base station transceiver to provide improved usage of the communication link between the remote unit and the central unit with reduced probability of overload.

In some embodiments the control module may be operable to determine information related to a load of a cell served by the base station transceiver. The control module may further be operable to determine information related to different transmission formats based on the information related to the load of the cell. For example, if the load of the cell is too high, another modulation order and transmission format or another user with another modulation order may be selected in order to meet the high load of the cell. Embodiments may provide improved usage of the communication link depending on the load of the cell served by the remote unit.

In further embodiments the control module may be operable to determine information related to a radio transmission concept used between a mobile transceiver and the base station transceiver. The control module may further be operable to determine information related to different transmission formats based on the information related to the radio transmission concept. For example, if Coordinated MultiPoint (CoMP) is used to receive data from a mobile transceiver at several remote units to improve performance even at cell edges, a more robust transmission format may be used to improve joint detection at the central unit controlling additional noise introduced between the remote unit and the central unit. Embodiments may provide, for example in case of joint reception transmission mode, a sufficiently high bit reception, wherein the noise is reduced or even at minimum.

In further embodiments the control module may be operable to determine information related to the quality of the communication link between the base station transceiver and at least one mobile transceiver. For example, if the actual Signal-to-Noise Ratio (SNR) and/or Signal-to-Interference-and-Noise Ratio (SINR) level on the communication link to the mobile transceiver may be higher than necessary to reach a certain performance, for example in terms of a certain Bit Error Rate (BER), there may be room for higher quantization noise on the communication link between the central and remote unit, and hence a lower resolution or a transmission format with a higher quantization noise may be used. In other words, if there is a higher SNR/SINR on the air interface between the remote unit a mobile transceiver, which may be even higher than required for the highest modulation and coding scheme, than a higher quantization noise may be allowed, acceptable or tolerable on the communication link between the remote unit and the central unit. The control module may then be operable to select a corresponding transmission format. The control module may further be operable to determine information related to the channel quality and/or interference situation of communication link to mobile transceiver and adapt a level of quantization noise on the link between the remote and central unit by selecting corresponding transmission formats accordingly. A scheduler located at the base station transceiver may, for example, select the modulation order depending on determined information on the channel quality or interference situation. The control module may then adapt the transmission format accordingly and provide an efficient usage of the communication link between the central unit and the remote unit. In some embodiments, the control module may even trigger the scheduler to change a modulation format in order to make more efficient use of the capacities of the link between the remote unit and the central unit.

In some embodiments a remote unit of a base station transceiver may comprise the above described apparatus. In other words, the apparatus may be located in the remote unit of the base station transceiver. Embodiments may provide improved usage of the communication link for example in uplink direction from the remote unit to the central unit.

In some embodiments a central unit of a base station transceiver may comprise the above described apparatus. In other words, the apparatus may be located in the central unit of the base station transceiver. Embodiments may further provide improved usage of the communication link for example in downlink direction from the central unit to the remote unit.

Embodiments further provide a method for controlling a transmission format on a communication link between a remote unit and a central unit of a base station transceiver of a mobile communication system. The method comprises determining information related to a property of data to be communicated between the remote unit and the central unit. The method further comprises determining information related to a transmission format based on the information related to the property of the data. Further, the method comprises providing the information related to the transmission format.

Embodiments further provide a computer program having a program code for performing the above described method, when the computer program is executed on a computer, processor, or programmable hardware component. A further embodiment is a computer readable storage medium storing instructions which, when executed by a computer, processor, or programmable hardware component, cause the computer to implement one of the methods described herein.

### Brief description of the figures

Some other features or aspects will be described using the following non-limiting embodiments of apparatuses or methods or computer programs or computer program products by way of example only, and with reference to the accompanying figures, in which
Fig. 1 shows a block diagram of two embodiments of a control apparatus, a base station transceiver comprises a remote unit with an embodiment of a control apparatus and a central unit with an embodiment of a control apparatus;
Fig. 2 shows a processing chain in the uplink of an OFDMA system in an embodiment of a base station transceiver;
Figs. 3a and 3b show the SNR after quantization vs. SNR before quantization for different bit resolutions in embodiments for two different SNR ranges; and
Fig. 4 shows a block diagram of an embodiment of a method for a base station transmitter.

### Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

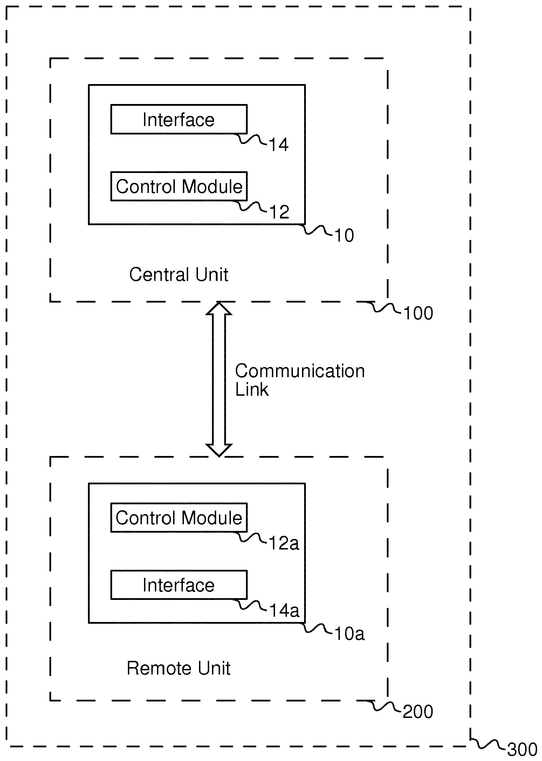

In the following some embodiments of apparatuses, methods and computer programs for controlling a transmission format on a communication link between a remote unit and a central unit of a base station transceiver will be described. Fig. 1 illustrates two embodiments of an apparatus 10, 10a, which is operable to control a transmission format on a communication link between a remote unit 200 and a central unit 100 of a base station transceiver 300 of a mobile communication system. Fig. 1 also illustrates an embodiment (dashed lines) of a remote unit 200 comprising an embodiment of the control apparatus 10. Fig. 1 further shows an embodiment (dashed lines) of a central unit 100 comprising an embodiment of the control apparatus 10. Fig. 1 also depicts an embodiment of a base station transceiver 300 comprising the central unit 100 and the remote unit 200.

The remote unit 200 and the central unit 100 can be located at different geographical locations. In other words, the base station transceiver 300 is assumed to comprise or to be composed of a central unit 100 and the remote unit 200. The central unit 200 and the remote unit 100 can be separated and can be interconnected, for example, by fiber optics or any wired link. In other embodiments the remote unit 200 and the central unit 100 can also be interconnected using a wireless link, e.g. a high data rate radio connection.

In the embodiment depicted in Fig. 1, the remote unit 200 as well as the central unit 100 comprise an apparatus 10, 10a, as described above and in the following. In further embodiments, not shown, either the remote unit 200 or the central unit 100 may comprise an apparatus 10, 10a, as described above and in the following.

In other words, the apparatus 10, 10a may be adapted to or operable in a central unit 100 and/or in a remote unit 200. Further, the apparatus 10, 10a may be adapted to be operable in a base station transceiver 300; the apparatus 10, 10a may be operated or comprised in a base station transceiver 300. Embodiments may also provide a base station transceiver 300 comprising the apparatus 10, 10a. Fig. 1 further shows an embodiment (dashed lines) of a base station transceiver 300 comprising the central unit 100 (dashed lines) and the remote unit 200 (dashed lines). The central unit 100 and the remote unit 200 are coupled by means of a communication link.

Fig. 1 further shows an embodiment, wherein the central unit 100 as well as the remote unit 200 comprises an apparatus 10, 10a. The base station transceiver 300 can be operative in a mobile communication system. In other words, the base station transceiver 300, the central unit 100, the remote unit 200, its apparatus 10, 10a, respectively, can be adapted, operable, or configured to comply with the mobile communication system.

The apparatus 10, 10a may hence be part of a mobile communication system. The mobile communication system may, for example, correspond to one of the mobile communication systems standardized by the 3^{rd} Generation Partnership Project (3GPP), as Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), further evolutions such as 5^{th} Generation (5G) networks, or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers and base station transceivers, which are composed of one or more central units and one or more remote units. A mobile transceiver may correspond to a smartphone, a cell phone, User Equipment (UE), a laptop, a notebook, a personal computer, a Personal Digital Assistant (PDA), a Universal Serial Bus (USB) -stick, a car, etc. A mobile transceiver or terminal may also be referred to as UE or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission and reception of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system may thus be cellular. The term cell refers to a coverage area of radio services provided by a transmission point, a remote unit, a remote head, a remote radio head, a base station transceiver or a NodeB, an eNodeB, respectively. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

The base station transceiver 300 may be operable to communicate with one or more active mobile transceivers (not shown) and a base station transceiver may be located in or adjacent to a coverage area of another base station transceiver, e.g. a macro cell base station transceiver or small cell base station transceiver. Hence, embodiments may provide a mobile communication system comprising one or more mobile transceivers and one or more base station transceivers, wherein the base station transceivers may establish macro cells or small cells, as e.g. pico-, metro-, or femto cells. A mobile transceiver may correspond to a smartphone, a cell phone, user equipment, a laptop, a notebook, a personal computer, a Personal Digital Assistant (PDA), a Universal Serial Bus (USB) -stick, a car, etc. A mobile transceiver may also be referred to as User Equipment (UE) or mobile in line with the 3GPP terminology.

The base station transceiver 300 may be located in the fixed or stationary part of the network or system. A base station transceiver may correspond to a remote radio head, a transmission point, an access point, a macro cell, a small cell, a micro cell, a femto cell, a metro cell etc. A base station transceiver may be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a Base Transceiver Station (BTS), an access point, a remote radio head, a transmission point etc., which may be further subdivided in a remote unit and a central unit.

A mobile transceiver (now shown) can be associated, camped on, or registered with a base station transceiver or cell. The term cell refers to a coverage area of radio services provided by a base station transceiver, e.g. a NodeB (NB), an eNodeB (eNB), a remote radio head, a transmission point, etc. A base station transceiver may operate one or more cells on one or more frequency layers, in some embodiments a cell may correspond to a sector. For example, sectors can be achieved using sector antennas, which provide a characteristic for covering an angular section around a remote unit or base station transceiver. In some embodiments, a base station transceiver may, for example, operate three or six cells covering sectors of 120° (in case of three cells), 60° (in case of six cells) respectively. A base station transceiver may operate multiple sectorized antennas. In the following a cell may represent an according base station transceiver generating the cell or, likewise, a base station transceiver may represent a cell the base station transceiver generates.

In other words, in embodiments the mobile communication system may correspond to a HetNet, which utilizes different cell types, i.e. Closed Subscriber Group (CSG) cells and open cells, and cells of different sizes, as, for example, macro cells and small cells, where the coverage area of a small cell is smaller than the coverage area of a macro cell. A small cell may correspond to a metro cell, a micro cell, a pico cell, a femto cell, etc. Such cells are established by base station transceivers for which their coverage areas are determined by their transmission power and interference condition. In some embodiments a small cell's coverage area can at least partly be surrounded by the coverage area of a macro cell established by another base station transceiver. The small cells can be deployed to extend the capacity of the network. A metro cell may therefore be used to cover a smaller area than a macro cell, e.g. a metro cell may cover a street or a section in a metropolitan area. For a macro cell the coverage area may have a diameter in the order of one or more kilometers, for a micro cell the coverage area may have a diameter below a kilometer, and for a pico cell the coverage area may have a diameter below a 100m. A femto cell may be the smallest cell and it may be used to cover a household or gate section at the airport, i.e. its coverage area may have a diameter below 50m. Thus, a base station transceiver may also be referred to as cell.

The apparatus 10, 10a comprises a control module 12, 12a. The control module 12, 12a is operable to determine information related to a property of data to be communicated between the remote unit 200 and the central unit 100. The control module 12, 12a is further operable to determine information related to a transmission format based on the information related to the property of the data. In embodiments the control module 12, 12a may be implemented using one or more control units, one or more control devices, any means for controlling, such as a processor, a computer or a programmable hardware component being operable with accordingly adapted software. In other words, the above described functions of the control module 12, 12a, may as well be implemented in software, which is then executed on one or more programmable hardware components. Such hardware components may comprise a general purpose processor, a Digital Signal Processor (DSP), a micro-controller, etc.

Embodiments may reduce the data rate between remote and central units 200, 100 by using an adaptive bit resolution interface, for example, different numbers of bits may be used to represent samples of QPSK data compared to 64QAM data on the communication link between the central unit 100 and the remote unit 200, for example, during pre- Inverse Fast Fourier Transformation (IFFT) processing in the downlink or post-FFT processing in the uplink.

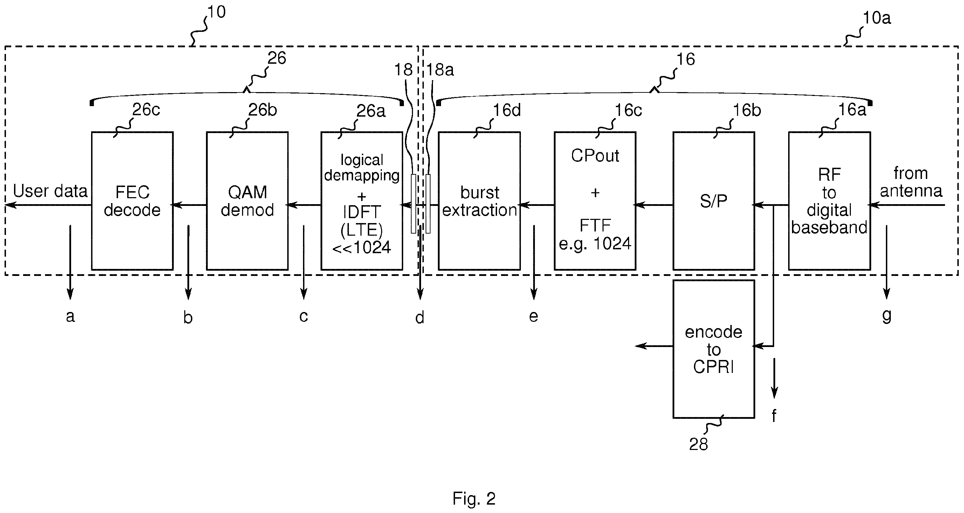

Different alternatives of splitting the processing resources between remote unit 200 and central unit 100 are conceivable and will be illustrated subsequently with the help of Fig. 2. Even for options where some processing, for example FFT and de-mapping, may be done at the remote unit 200, the data rate may still be high especially for the uplink. For digital signal processing signals may be represented using binary words. While in conventional concepts bit resolutions in digital processing units for wireless communications are chosen rather inflexible, for example solely depending on the stage of processing, embodiments may enable adaptive or flexible representation on the link between central and remote units 100, 200. Therefore, embodiments described herein may provide an adaption of the required data rate between remote and central units 200, 100 with controlled or even no performance losses. Embodiments may provide a flexible and adaptive solution.

To calculate a data rate to be used between the remote unit and the central unit or in the opposite direction, the bit resolution of the I/Q samples may be taken into account. To fulfill the performance criteria, for example in terms of an Error Vector Magnitude (EVM) requirement a certain number of bits may be used. The number of bits may be depending on the modulation of the signal. For example, QPSK may use fewer bits than 64QAM for the same EVM values. Instead of dimensioning the interface or data rate for the worst case, i.e. for the 64QAM case, the interface or data rate may be adapted depending on the modulation order of the data.

In the embodiments depicted in Fig. 1 the apparatuses 10, 10a further comprise interfaces 14, 14a. In the embodiments depicted in Fig. 1, each of the central unit 100 as well as the remote unit 200 apparatuses 10, 10a comprises an interface 14, 14a. The interface 14, 14a is operable to provide the information related to the transmission format. In embodiments the interface 14, 14a may be a network interface device that communicates, e.g. transmits or receives, information to and/or from one or more network devices, as e.g. the remote unit 200 and/or the central unit 100. In some embodiments an interface 14, 14a may correspond to an optical interface, e.g. CPRI in some cases in which only QPSK users are scheduled in a time transmission interval, or any other wireless or wired interface.

In some embodiments, the internal interface modules 14, 14a may be matched to the actual data, i.e. the requirements or demands linked with the actual data, instead of matching to the data with the highest requirements. In embodiments interface requirements may be reduced. The need for storage resources in the base station transceiver 300, e.g. on the side of the remote unit 200 and/or on the side of the central unit 100 may be reduced in embodiments. Embodiments may enable the possibility to make use of statistical multiplexing in case of centralized processing. In case of split processing the required rate on the fronthauling links may be relaxed in embodiments.

The apparatus 10, 10a may further comprise a processing module 18, 18a (not shown in Fig. 1), which will be detailed subsequently with the help of Fig. 2. In embodiments the processing module 18, 18a may be implemented using one or more processing units, processing devices, any means for processing, such as a processor, a computer or a programmable hardware component being operable with accordingly adapted software. In other words, the above described functions of the processing module 18, 18a, may as well be implemented in software, which is then executed on one or more programmable hardware components. Such hardware components may comprise a general purpose processor, a Digital Signal Processor (DSP), a micro-controller, etc. The processing module 18, 18a may be coupled to the interface 14, 14a. The processing module 18, 18a may be operable to communicate the data between the remote unit 200 and the central unit 100 based on the information of the transmission format.

In embodiments the control module 12, 12a may further be operable to determine information related to a first or a second modulation order of the data as information related to the property of the data. The first modulation order may be lower than the second modulation order. The control module 12, 12a may further be operable to determine information related to a first transmission format when information related to the first modulation order is determined. In some embodiments, the control module 12, 12a may be operable to determine information related to a second transmission format when information related to the second modulation is determined, wherein the information related to the first transmission format indicates a lower resolution for samples communicated between the remote unit 200 and the central unit 100 then the information related to the second transmission format. The selection of the modulation order may then determine how much information, for example how many bits, may be transported per modulation symbol. However, the more information is transported per modulation symbol the higher the resource utilization on the communication link between the central unit 100 and the remote unit 200.

In some embodiments the first modulation order may correspond to Quaternary Phase Shift Keying (QPSK) and the second modulation order may correspond to 64 Quadrature Amplitude Modulation (64QAM). In embodiments, the first and second transmission formats may correspond to different quantization granularities of samples of data. According to some embodiments, the first and second transmission formats may differ by at least one bit per quantized sample. Alternatively, in some embodiments the first and second transmission formats may differ by two bits per quantized sample, alternatively the first and second transmission formats may differ by three bits per quantized sample, alternatively the difference may be four or more bits.

In some embodiments the control module 12, 12a may be operable to determine, as information related to the data property, whether the data to be communicated between the remote unit 200 and the central unit 100 corresponds to payload data or control data. In further embodiments the control module 12, 12a may be operable to determine information related to different transmission formats based on whether the data corresponds to payload data or control data. Payload data may correspond to actual or body data exchanged between higher layers such as the application layer in the protocol tack. Control data may relate to information which may be used for controlling and organizing communication links between communication devices in a communication network, e.g. for radio link establishment and maintenance. Therefore control data may have a higher priority than payload data, as control data may be used to maintain the communication link, and as such, if control data gets lost the communication link may fail, drop or get disrupted. On the contrary, if payload data gets lost, it can be send again. Therefore, control data may be transported using, for example, a more reliable modulation order or transmission format than is used for transportation of payload data. Besides, at least a certain reception quality for signals of a modulation order may be achieved, and as such, if the control data is using, for example, a Binary Phase Shift Keying (BPSK) modulation, for example, QPSK may be used for payload data.

As has been explained above, due to the sampling and quantizing for transport on the communication link between the central unit 100 and the remote unit 200 quantization noise may be introduced which may impair the signal quality. In some embodiments control data may be transported using a higher quantization than payload data to ensure quality and link stability. In some embodiments, due to a more robust transmission concept, control data may be able tolerate a higher level of quantization noise and hence, in such embodiments a lower quantization granularity may be used.

In further embodiments, the control module 12, 12a may be operable to determine, as information related to the data property, information related to a target quality to be achieved for the data to be communicated between the remote unit 200 and the central unit 100. The control module 12, 12a may further be operable to determine information related to different transmission formats based on the information related to the quality to be achieved. For example, the target quality in terms of a required SNR or SINR or error rate, such as Bit Error Rate (BER) at the decoder, may determine a level of quantization noise, which is tolerable and which may then be introduced in embodiments on the respective communication link between central and remote units 100, 200.

In some embodiments the control module 12, 12a may be operable to determine, as information related to the data property, information related to a quality of service to be achieved for the data to be communicated between the remote unit 200 and the central unit 100. Further, the control module 12, 12a may be operable to determine information related to different transmission formats based on the information related to the quality of service. In a similar way as explained above, a certain service may be able to tolerate a certain level of quantization noise introduced on the communication link and such tolerance may be derived from QoS requirements, which may as well be given in terms of a SNR, SINR, or BER.

In further embodiments, the control module 12, 12a may be operable to determine information related to a load or an available bandwidth on the communication link between the remote unit 200 and the central unit 100. The control module 12, 12a may further be operable to determine information related to different transmission formats based on the information related to the load or the available bandwidth. For example, the control module 12, 12a may be coupled with a data scheduler (not shown in Fig. 1) of the base station transceiver 300, which may be located in the central station 100. The control apparatus 10, 10a may monitor the load or bandwidth on the communication link and in case of critical condition, for example when close to overload, the control apparatus 10, 10a may inform the scheduler which may then restrict the allocated modulation scheme or format such that the lower quantization resolution and accordingly less bits can be used for representing samples on the communication link between the central and remote units 100, 200. For example, a scheduler located in the base station transceiver 300 may be made aware of the available bandwidth on the link between central unit 100 and remote unit 200, and as such, a modulation order with a higher bit rate, e.g. 64QAM for a first mobile transceiver, or a modulation order with a lower bit rate, e.g. QPSK for a second mobile transceiver, may be used, depending for example on the available bandwidth or capacity.

In some embodiments the control module 12, 12a may be operable to communicate with a data scheduler of the base station transceiver 300. That is to say, the base station transceiver 300 may comprise means for allocating radio resources for a transmission of data between the remote unit 200 and a mobile transceiver. Furthermore, the data scheduler may be operable to provide information on allocated radio resources to the remote unit 200. In other words, in embodiments scheduling decisions may be carried out at the central unit 100, such as which mobile transceiver may be served with which radio resources in the downlink, which mobile transceiver gets to transmit data on which radio resources in the uplink, respectively.

In embodiments the control module 12, 12a may be operable to provide information related to a modulation order restriction to the scheduler if an overload situation is determined on the communication link between the remote unit 200 and the central unit 100.

In further embodiments the control module 12, 12a may be operable to determine information related to a load of a cell served by the base station transceiver. Further, the control module 12, 12a may be operable to determine information related to different transmission formats based on the information related to the load of the cell. For example, the required bandwidth on the link between remote and central units 200, 100 may be restricted/limited in case of high load, while being able to increase quality in case of low load on the communication link between the central unit 100 and the remote unit 200.

In some embodiments the control module 12, 12a may be operable to determine information related to a radio transmission concept used between a mobile transceiver and the base station transceiver 300. Further, the control module 12, 12a may be operable to determine information related to different transmission formats based on the information related to the radio transmission concept. For example, in case of CoMP/no CoMP the bit resolution in the uplink direction may be higher for joint reception.

In further embodiments the remote unit 200 of a base station transceiver 300 may comprise the above described apparatus 10a. In other words, the apparatus 10a may be located at the remote unit 200. For example, in uplink direction, i.e. in the direction from the remote unit 200 to the central unit 100, the apparatus 10a may reduce the required data rate between the remote unit 200 and central unit 100 by using an adaptive bit resolution interface, i.e. the internal interface may be matched to the requirements linked with the actual data.

Alternatively or additionally, the central unit 100 of the base station transceiver 300 may comprise the above described apparatus 10. In other words, the apparatus 10 may be located at the central unit 100. For example, in downlink direction, i.e. in the direction from the central unit 100 to the remote unit 200, the apparatus 10 may reduce the required data rate between the central unit 200 and remote unit 100 by using an adaptive bit resolution interface, i.e. the internal interface may be matched to the requirements linked with the actual data.

In centralized RAN architecture deployments the link capacity between a remote unit 200 and a central unit 100 may play an important role. Embodiments, as described herein, may reduce the required data rate per link and may also improve the multiplexing gain for sending the I/Q samples for several sectors or cells over the same physical link. For the decision, which part of the signal needs which bit resolution one or more of the following parameters may be used: the modulation order (less for QPSK than for 64 QAM), data channel or control channel, target quality to be achieved, which may for example be also service depending, the available bandwidth, which may be coupled with the scheduler to restrict the allocated modulation order on the available bandwidth, the load of the cellular network, which may e.g. restrict the required bandwidth in case of full load, while being able to increase quality in case of low load, the transmission mode, for example, if CoMP is used or not, which would require, that in uplink for joint reception the resolution should be higher, the used service, i.e. if the service is a call, data, video, sensor message, and/or the actual SNR/SINR, i.e. channel quality and interference situation. The list of parameters described above is only an exemplary list, and not limited thereon, further parameters may also be used for the decision, which part of the signal need which bit resolution.

Embodiments may allow a reduction of the required data rate in centralized RAN architectures over the link from the remote unit 200 to the central unit 100. Also the multiplexing gains are potentially higher. The ultimate gain is cost reduction for new installments and easier integration into existing ones. Embodiments may reduce the data rate per link, which leads to an improved flexibility.

Fig. 2 shows a processing chain in the uplink of an OFDMA system in the base station transceiver 300. OFDMA is to be understood as an example; other examples are Single Carrier-FDMA, Filter Bank Multi-Carrier (FBMC), Universal Filtered Multi-Carrier (UFMC), etc. An apparatus 10a as described above located in a remote unit 200 (remote unit apparatus) and an apparatus 10 as described above located in a central unit 100 (central unit apparatus) are illustrated by the broken line boxes. On the very right a signal, i.e. the uplink receive signal, is received through e.g. a receive antenna, one or more filters and an LNA. The arrow g symbolizes an approach, which is also referred to as radio over fiber, where the received radio signal is converted to an optical signal and transmitted to the central unit 100. In Figure 2 a processing module 16 is subdivided in four processing blocks 16a, 16b, 16c and 16d.

In embodiments the processing module 16 may be implemented using one or more processing units, processing devices, any means for processing, such as a processor, a computer or a programmable hardware component being operable with accordingly adapted software. In other words, the above described functions of the processing module 16, may as well be implemented in software, which is then executed on one or more programmable hardware components. Such hardware components may comprise a general purpose processor, a Digital Signal Processor (DSP), a micro-controller, etc.

In embodiments, the functions described in connection with the processing module 16 may alternatively be implemented for example by the processing module 18a, as described above.

In block 16a the signal is converted from the transmission band to the digital base band, i.e. the signal is down-mixed from the Radio Frequency (RF) to the base band frequency and digitized (analog/digital converted). The digitized base band signal is also symbolized by arrow f and block 28 represents an approach, where the digitized base band signal is forwarded in form of time domain IQ samples to the central unit 100 using the Common Public Radio Interface (CPRI).

In block 16b digitized base band signal is serial-parallel converted before subsequently in block 16c, the cyclic prefix (CP) is removed and the signal is transformed into the frequency domain using a Fast Fourier Transmission (FFT), e.g. of size 1024. The arrow e symbolizes the frequency domain samples and the possibility to transport the received frequency domain symbols, i.e. the output of FFT encoded via "frequency domain CPRI", to the central unit 100.

Block 16d illustrates the burst extraction or demultiplexing of user signals from the frequency domain samples based on the information on the uplink demultiplexing instruction from the central unit apparatus 10 to obtain the demultiplexed uplink signals or uplink signal components. In other words, users or signals of the mobile transceivers are demultiplexed, where users or mobile transceivers sharing the same subcarrier are still superimposed, which therefore still supports CoMP. The processing module 16 is adapted to process the uplink receive signal based on information on an uplink demultiplexing instruction from the central unit 100 to obtain demultiplexed uplink signal components, wherein the uplink receive signal has a higher bandwidth than the sum of the bandwidths of the demultiplexed uplink signal components, which are actually communicated to the central unit 100, such that capacity on the link between central unit 100 and remote unit 200 may be conserved as compared to communicating the uplink received signal without being demultiplexed. The central unit apparatus 10 may include information on the desired set of radio resources being comprised in the information on the uplink demultiplexing instruction, the set of desired radio resources corresponds to a set of subcarriers in one or a set of OFDM symbols. In other embodiments, e.g. embodiments in CDMA, the set of desired radio resources may correspond to a subset of code sequences, a set of time slots, etc.

Generally, in embodiments the information on the uplink demultiplexing instruction and/or the information on the downlink multiplexing instruction can comprise information on an OFDM signal form and/or how it is composed/decomposed based on OFDMA signal parts, wherein the OFDM signal form corresponds to the uplink receive signal and/or the multiplexed downlink data signal, and wherein the OFDMA signal parts correspond to the downlink signal components and/or demultiplexed uplink signal components.

In other words and as indicated in Fig. 2, binary representations of noisy QAM symbols or QPSK symbols are then communicated from the remote unit apparatus 10a through the processing module 18a to the central unit apparatus 10, which is also symbolized by arrow d. Multiplexing gain or rate reduction in case of an under-loaded cell can be achieved through omitting unused symbols, i.e. without scheduled users. Samples of unused subcarriers may not be communicated, i.e. they may not be part of the set of desired radio resources. In some embodiments, lossy block scaling compression may still be applied. Such an implementation would be straight forward within the framework of the embodiment as each signal part forms a block that can be easily scaled/compressed individually.

In the embodiment depicted in Fig. 2, demultiplexed uplink signals or signal components are then communicated through the processing module 18a from the remote unit apparatus 10a to the central unit apparatus 10. The central unit apparatus 10 receives the demultiplexed uplink signal components or signals through the processing module 18. In embodiments, generally, the central unit apparatus 10 may further comprise a processing module 26, which is subdivided into three blocks 26a, 26b and 26c in Figure 2.

In embodiments the processing module 26 may be implemented using one or more processing units, processing devices, any means for processing, such as a processor, a computer or a programmable hardware component being operable with accordingly adapted software. In other words, the above described functions of the processing module 26, may as well be implemented in software, which is then executed on one or more programmable hardware components. Such hardware components may comprise a general purpose processor, a Digital Signal Processor (DSP), a micro-controller, etc.

In embodiments, the functions described in connection with the processing module 26 may alternatively be implemented for example by the processing module 18, as described above.

In block 26a a logical de-mapping is carried out in addition to another, smaller sized, Inverse Discrete Fourier Transformation (IDFT) to undo the sender-side DFT, which is used in LTE as pre-filter measure for reduction of the peak-to-average-power-ratio of the time domain OFDM signal. The arrow c symbolizes an approach, in which binary representations of soft-bits could be transported if block 26a was still part of the remote unit apparatus 10. Subsequently, QAM demodulation or QPSK demodulation is carried out in block 26b, where the arrow b symbolizes transportation of equalized QAM symbols or QPSK symbols, when block 26a and 26b would still belong to the remote unit apparatus 10a. After FEC decoding in block 26c, the user data is available and arrow a symbolizes an approach, where fully decoded user data (hard-bits) could be transported, when block 26a to 26c would still belong to the remote unit apparatus 10a, for example using the Internet Protocol (IP).

The embodiment depicted in Fig. 2 only shows one possibility how the remote unit 200 and the central unit 100 may be separated. Further embodiments, now shown, may have another separation of the modules depicted in Fig. 2. For example, module 16d may also be located in the central unit apparatus 10 and not, as shown in Fig. 2 in the remote unit apparatus 10a.

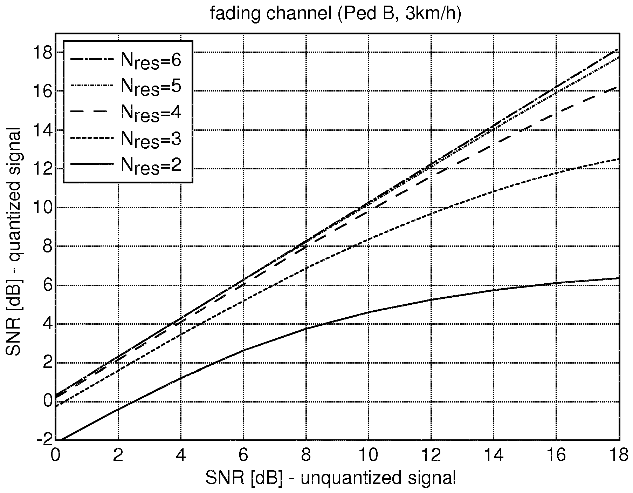

Figs. 3a and 3b show the Signal-to-Noise-Ratio (SNR) after quantization versus the SNR before quantization for different bit resolutions for two different SNR ranges. Fig. 3a depicts the range from 0 to 18dB SNR versus the un-quantized signal, whereas Fig. 3b depicts the range from 12 to 20dB SNR versus the un-quantized signal. The x-axis depicts the SNR of the un-quantized signal, whereas the y-axis depicts the SNR of the quantized signal. For example, QPSK and 64QAM have different working points with respect to SNR. So, as QPSK allows lower SNR a lower resolution may be acceptable. E.g. with a working point of 4dB resolution should for example be at least 4Bits, while with 12dB resolution should, for example, be at least 5Bits.

As indicated by the legends in Figs. 3a and 3b for different resolutions or numbers of bits Nᵣₑₛ different relations arise between the quantized and un-quantized signal, due to the introduction of additional quantization noise. Generally, for low SNR, i.e. for high noise contributions based on other sources, the quantization noise does not take large effect. The lower the noise from other contributors, i.e. the higher the SNR of the un-quantized signal, the higher the effect of the quantization noise. Furthermore, the higher the resolution Nᵣₑₛ the lower the quantization noise and the less its effect. Hence, for the quantization noise to take a low effect, the higher a desired SNR the higher the resolution Nᵣₑₛ should be.

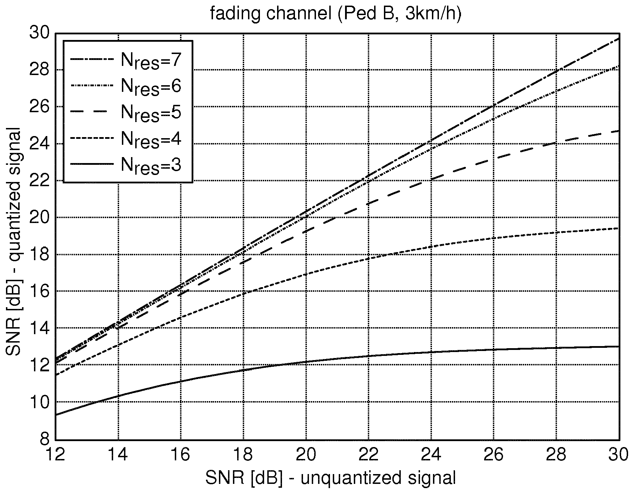

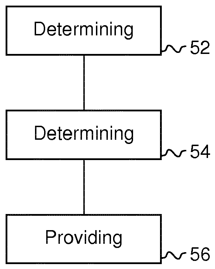

Fig. 4 shows a block diagram of a flow chart of an embodiment of a method for controlling a transmission format on a communication link between a remote unit 200 and a central unit 100 of a base station transceiver 300 of a mobile communication system. The method comprises determining 52 information related to a property of data to be communicated between the remote unit 200 and the central unit 100. The method further comprises determining 54 information related to a transmission format based on the information related to the property of the data. The method further comprises providing 56 the information related to the transmission format.

A further embodiment is a computer readable storage medium storing instructions which, when executed by a computer, cause the computer to implement the method described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for determining", "means for processing", "means for controlling", "means for allocating", etc., may be provided through the use of dedicated hardware, such as "an interface", "a controller/processor", "determiner", "allocator", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The scope of the invention is defined by the independent claims. Preferred embodiments are defined by the dependent claims.

## Claims

1. An apparatus (10, 10a) operable to control a transmission format on a communication link between a remote unit (200) and a central unit (100) of a base station transceiver (300) of a mobile communication system, the apparatus (10, 10a) comprising:
a control module (12, 12a) operable to determine information related to a property of data to be communicated between the remote unit (200) and the central unit (100), wherein the control module (12, 12a) is further operable to determine information related to a transmission format based on the information related to the property of the data;
wherein the control module (12, 12a) is operable to determine information related to a first or a second modulation order of the data as information related to the property of the data, wherein the first modulation order is lower than the second modulation order, and wherein the control module (12, 12a) is operable to determine information related to a first transmission format when information related to the first modulation order is determined, and wherein the control module (12, 12a) is operable to determine information related to a second transmission format when information related to the second modulation is determined, wherein the information related to the first transmission format indicates a lower resolution for I/Q samples communicated between the remote unit (200) and the central unit (100) than the information related to the second transmission format;
wherein the control module (12, 12a) is operable to determine, as information related to the data property, whether the data to be communicated between the remote unit (200) and the central unit (100) corresponds to payload data or control data, and wherein the control module (12, 12a) is operable to determine information related to the resolution of the I/Q samples of the corresponding transmission formats based on whether the data corresponds to payload data or control data;
an interface (14, 14a) operable to provide the information related to the transmission format; and
further comprising a processing module (18, 18a), which is coupled to the interface (14, 14a), the processing module (18, 18a) is operable to communicate the data between the remote unit (200) and the central unit (100) based on the information of the transmission format.

2. The apparatus (10, 10a) of claim 1, wherein the first modulation order corresponds to quaternary phase shift keying and wherein the second modulation order corresponds to 64 quadrature amplitude modulation, and wherein the first and second transmission formats correspond to different quantization granularities of samples of data, wherein the first and second transmission formats differ by at least one bit per quantized sample.

3. The apparatus (10, 10a) of claim 1, wherein the control module (12, 12a) is operable to determine, as information related to the data property, information related to a target quality to be achieved for the data to be communicated between the remote unit (200) and the central unit (100), and wherein the control module (12, 12a) is operable to determine information related to different transmission formats based on the information related to the quality to be achieved.

4. The apparatus (10, 10a) of claim 1, wherein the control module (12, 12a) is operable to determine, as information related to the data property, information related to a quality of service to be achieved for the data to be communicated between the remote unit (200) and the central unit (100), and wherein the control module (12, 12a) is operable to determine information related to different transmission formats based on the information related to the quality of service.

5. The apparatus (10, 10a) of claim 1, wherein the control module (12, 12a) is operable to determine information related to a load or an available bandwidth on the communication link between the remote unit (200) and the central unit (100), and wherein the control module (12, 12a) is operable to determine information related to different transmission formats based on the information related to the load or the available bandwidth.

6. The apparatus (10, 10a) of claim 5, wherein the control module (12, 12a) is further operable to communicate with a data scheduler of the base station transceiver (300) and wherein the control module (12, 12a) is operable to provide information related to a modulation order restriction, if an overload situation is determined on the communication link between the remote unit (200) and the central unit (100).

7. The apparatus (10, 10a) of claim 1, wherein the control module (12, 12a) is operable to determine information related to a load of a cell served by the base station transceiver (300), and wherein the control module (12, 12a) is operable to determine information related to different transmission formats based on the information related to the load of the cell.

8. The apparatus (10, 10a) of claim 1, wherein the control module (12, 12a) is operable to determine information related to a radio transmission concept - CoMP/no CoMP - used between a mobile transceiver and the base station transceiver (300), and wherein the control module (12, 12a) is operable to determine information related to different transmission formats based on the information related to the radio transmission concept.

9. A remote unit (200) of a base station transceiver (300) comprising the apparatus (10a) of claim 1.

10. A central unit (100) of a base station transceiver (300) comprising the apparatus (10) of claim 1.

11. A method for controlling a transmission format on a communication link between a remote unit (200) and a central unit (100) of a base station transceiver (300) of a mobile communication system, the method comprising:
determining (52) information related to a property of data to be communicated between the remote unit (200) and the central unit (100);
determining (54) information related to a transmission format based on the information related to the property of the data;
determining information related to a first or a second modulation order of the data as information related to the property of the data, wherein the first modulation order is lower than the second modulation order;
determining information related to a first transmission format when information related to the first modulation order is determined;
determining information related to a second transmission format when information related to the second modulation is determined, wherein the information related to the first transmission format indicates a lower resolution for I/Q samples communicated between the remote unit (200) and the central unit (100) than the information related to the second transmission format;
determining, as information related to the data property, whether the data to be communicated between the remote unit (200) and the central unit (100) corresponds to payload data or control data;
determining information related to the resolution of the I/Q samples of the corresponding transmission formats based on whether the data corresponds to payload data or control data;
providing (56) the information related to the transmission format; and communicating the data between the remote unit (200) and the central unit (100) based on the information of the transmission format.

12. A computer program having a program code for performing the method of claim 11, when the computer program is executed on a computer, a processor, or a programmable hardware component.

## Patentansprüche

1. Vorrichtung (10, 10a), betreibbar zum Steuern eines Übertragungsformats auf einer Kommunikationsverbindung zwischen einer entfernten Einheit (200) und einer zentralen Einheit (100) eines Basisstations-Sendeempfängers (300) eines Mobilkommunikationssystems, wobei die Vorrichtung (10, 10a) Folgendes umfasst:
ein Steuermodul (12, 12a), betreibbar zum Bestimmen von Informationen in Bezug auf eine Eigenschaft von zwischen der entfernten Einheit (200) und der zentralen Einheit (100) zu übermittelnden Daten, wobei das Steuermodul (12, 12a) ferner betreibbar ist zum Bestimmen von Informationen in Bezug auf ein Übertragungsformat auf der Basis der Informationen in Bezug auf die Eigenschaft der Daten;
wobei das Steuermodul (12, 12a) betreibbar ist zum Bestimmen von Informationen in Bezug auf eine erste oder zweite Modulationsordnung der Daten als Informationen in Bezug auf die Eigenschaft der Daten, wobei die erste Modulationsordnung niedriger als die zweite Modulationsordnung ist und wobei das Steuermodul (12, 12a) betreibbar ist zum Bestimmen von Informationen in Bezug auf ein erstes Übertragungsformat, wenn Informationen in Bezug auf die erste Modulationsordnung bestimmt werden, und wobei das Steuermodul (12, 12a) betreibbar ist zum Bestimmen von Informationen in Bezug auf ein zweites Übertragungsformat, wenn Informationen in Bezug auf die zweite Modulation bestimmt werden, wobei die Informationen in Bezug auf das erste Übertragungsformat für I/Q-Abtastwerte, die zwischen der entfernten Einheit (200) und der zentralen Einheit (100) übermittelt werden, eine niedrigere Auflösung als die Informationen in Bezug auf das zweite Übertragungsformat angeben;
wobei das Steuermodul (12, 12a) betreibbar ist zum Bestimmen, ob die zwischen der entfernten Einheit (200) und der zentralen Einheit (100) zu übermittelnden Daten Nutzinformationsdaten oder Steuerdaten entsprechen, als Informationen in Bezug auf die Dateneigenschaft, und wobei das Steuermodul (12, 12a) betreibbar ist zum Bestimmen von Informationen in Bezug auf die Auflösung der I/Q-Abtastwerte der entsprechenden Übertragungsformate abhängig davon, ob die Daten Nutzinformationsdaten oder Steuerdaten entsprechen;
eine Schnittstelle (14, 14a), betreibbar zum Bereitstellen der Informationen in Bezug auf das Übertragungsformat; und
ferner mit einem Verarbeitungsmodul (18, 18a), das mit der Schnittstelle (14, 14a) gekoppelt ist, wobei das Verarbeitungsmodul (18, 18a) betreibbar ist zum Übermitteln der Daten zwischen der entfernten Einheit (200) und der zentralen Einheit (100) auf der Basis der Informationen des Übertragungsformats.

2. Vorrichtung (10, 10a) nach Anspruch 1, wobei die erste Modulationsordnung Quaternärphasenumtastung entspricht und wobei die zweite Modulationsordnung 64-Quadraturamplitudenmodulation entspricht und wobei das erste und zweite Übertragungsformat verschiedenen Quantisierungsgranularitäten von Abtastwerten von Daten entsprechen, wobei sich das erste und zweite Übertragungsformat um mindestens ein Bit pro quantisiertem Abtastwert unterscheiden.

3. Vorrichtung (10, 10a) nach Anspruch 1, wobei das Steuermodul (12, 12a) betreibbar ist zum Bestimmen von Informationen in Bezug auf eine Zielqualität, die für die zwischen der entfernten Einheit (200) und der zentralen Einheit (100) zu übermittelnden Daten zu erzielen ist, als Informationen in Bezug auf die Dateneigenschaft und wobei das Steuermodul (12, 12a) betreibbar ist zum Bestimmen von Informationen in Bezug auf verschiedene Übertragungsformate auf der Basis der Informationen in Bezug auf die zu erzielende Qualität.

4. Vorrichtung (10, 10a) nach Anspruch 1, wobei das Steuermodul (12, 12a) betreibbar ist zum Bestimmen von Informationen in Bezug auf eine Dienstgüte, die für die zwischen der entfernten Einheit (200) und der zentralen Einheit (100) zu übermittelnden Daten zu erzielen ist, als Informationen in Bezug auf die Dateneigenschaft und wobei das Steuermodul (12, 12a) betreibbar ist zum Bestimmen von Informationen in Bezug auf verschiedene Übertragungsformate auf der Basis der Informationen in Bezug auf die Dienstgüte.

5. Vorrichtung (10, 10a) nach Anspruch 1, wobei das Steuermodul (12, 12a) betreibbar ist zum Bestimmen von Informationen in Bezug auf eine Last oder eine verfügbare Bandbreite auf der Kommunikationsverbindung zwischen der entfernten Einheit (200) und der zentralen Einheit (100) und wobei das Steuermodul (12, 12a) betreibbar ist zum Bestimmen von Informationen in Bezug auf verschiedene Übertragungsformate auf der Basis der Informationen in Bezug auf die Last oder die verfügbare Bandbreite.

6. Vorrichtung (10, 10a) nach Anspruch 5, wobei das Steuermodul (12, 12a) ferner betreibbar ist zum Kommunizieren mit einem Datenscheduler des Basisstations-Sendeempfängers (300), und wobei das Steuermodul (12, 12a) betreibbar ist zum Bereitstellen von Informationen in Bezug auf eine Modulationsordnungsbeschränkung, wenn eine Überlastsituation auf der Kommunikationsverbindung zwischen der entfernten Einheit (200) und der zentralen Einheit (100) bestimmt wird.

7. Vorrichtung (10, 10a) nach Anspruch 1, wobei das Steuermodul (12, 12a) betreibbar ist zum Bestimmen von Informationen in Bezug auf eine Last einer durch den Basisstations-Sendeempfänger (300) versorgten Zelle, und wobei das Steuermodul (12, 12a) betreibbar ist zum Bestimmen von Informationen in Bezug auf verschiedene Übertragungsformate auf der Basis der Informationen in Bezug auf die Last der Zelle.

8. Vorrichtung (10, 10a) nach Anspruch 1, wobei das Steuermodul (12, 12a) betreibbar ist zum Bestimmen von Informationen in Bezug auf ein Funkübertragungskonzept - CoMP/kein CoMP - das zwischen einem Mobil-Sendeempfänger und dem Basisstations-Sendeempfänger (300) verwendet wird, und wobei das Steuermodul (12, 12a) betreibbar ist zum Bestimmen von Informationen in Bezug auf verschiedene Übertragungsformate auf der Basis der Informationen in Bezug auf das Funkübertragungskonzept.

9. Entfernte Einheit (200) eines Basisstations-Sendeempfängers (300), die die Vorrichtung (10a) nach Anspruch 1 umfasst.

10. Zentrale Einheit (100) eines Basisstations-Sendeempfängers (300), die die Vorrichtung (10) nach Anspruch 1 umfasst.

11. Verfahren zum Steuern eines Übertragungsformats auf einer Kommunikationsverbindung zwischen einer entfernten Einheit (200) und einer zentralen Einheit (100) eines Basisstations-Sendeempfängers (300) eines Mobilkommunikationssystems, wobei das Verfahren Folgendes umfasst:
Bestimmen (52) von Informationen in Bezug auf eine Eigenschaft von zwischen der entfernten Einheit (200) und der zentralen Einheit (100) zu übermittelnden Daten;
Bestimmen (54) von Informationen in Bezug auf ein Übertragungsformat auf der Basis der Informationen in Bezug auf die Eigenschaft der Daten;
Bestimmen von Informationen in Bezug auf eine erste oder eine zweite Modulationsordnung der Daten als Informationen in Bezug auf die Eigenschaft der Daten, wobei die erste Modulationsordnung niedriger als die zweite Modulationsordnung ist;
Bestimmen von Informationen in Bezug auf ein erstes Übertragungsformat, wenn Informationen in Bezug auf die erste Modulationsordnung bestimmt sind;
Bestimmen von Informationen in Bezug auf ein zweites Übertragungsformat, wenn Informationen in Bezug auf die zweite Modulation bestimmt sind, wobei die Informationen in Bezug auf das erste Übertragungsformat für I/Q-Abtastwerte, die zwischen der entfernten Einheit (200) und der zentralen Einheit (100) übermittelt werden, eine niedrigere Auflösung als die Informationen in Bezug auf das zweite Übertragungsformat angeben;
Bestimmen, ob die zwischen der entfernten Einheit (200) und der zentralen Einheit (100) zu übermittelnden Daten Nutzinformationsdaten oder Steuerdaten entsprechen, als Informationen in Bezug auf die Dateneigenschaft;
Bestimmen von Informationen in Bezug auf die Auflösung der I/Q-Abtastwerte der entsprechenden Übertragungsformate abhängig davon, ob die Daten Nutzinformationsdaten oder Steuerdaten entsprechen;
Bereitstellen (56) der Informationen in Bezug auf das Übertragungsformat; und
Übermitteln der Daten zwischen der entfernten Einheit (200) und der zentralen Einheit (100) auf der Basis der Informationen des Übertragungsformats.

12. Computerprogramm mit einem Programmcode zum Ausführen des Verfahrens nach Anspruch 11, wenn das Computerprogramm auf einem Computer, einem Prozessor oder einer programmierbaren Hardwarekomponente ausgeführt wird.

## Revendications

1. Appareil (10, 10a) permettant de commander un format de transmission sur une liaison de communication entre une unité distante (200) et une unité centrale (100) d'un émetteur-récepteur de station de base (300) d'un système de communication mobile, l'appareil (10, 10a) comprenant :
un module de commande (12, 12a) permettant de déterminer des informations se rapportant à une propriété de données qui doivent être communiquées entre l'unité distante (200) et l'unité centrale (100), dans lequel le module de commande (12, 12a) permet en outre de déterminer des informations se rapportant à un format de transmission en se basant sur les informations se rapportant à la propriété des données ;
dans lequel le module de commande (12, 12a) permet de déterminer des informations se rapportant à un premier ou à un second ordre de modulation des données en tant qu'informations se rapportant à la propriété des données, dans lequel le premier ordre de modulation est inférieur au second ordre de modulation, et dans lequel le module de commande (12, 12a) permet de déterminer des informations se rapportant à un premier format de transmission lorsque des informations se rapportant au premier ordre de modulation sont déterminées, et dans lequel le module de commande (12, 12a) permet de déterminer des informations se rapportant à un second format de transmission lorsque des informations se rapportant à la seconde modulation sont déterminées, dans lequel les informations se rapportant au premier format de transmission indiquent une résolution plus faible pour des échantillons I/Q communiqués entre l'unité distante (200) et l'unité centrale (100) que celle des informations se rapportant au second format de transmission ;
dans lequel le module de commande (12, 12a) permet de déterminer, en tant qu'informations se rapportant à la propriété de données, si les données qui doivent être communiquées entre l'unité distante (200) et l'unité centrale (100), correspondent à des données de charge utile ou à des données de commande, et dans lequel le module de commande (12, 12a) permet de déterminer des informations se rapportant à la résolution des échantillons I/Q des formats de transmission correspondants selon que les données correspondent à des données de charge utile ou à des données de commande ;
une interface (14, 14a) permettant de fournir les informations se rapportant au format de transmission ; et
comprenant en outre un module de traitement (18, 18a), qui est couplé à l'interface (14, 14a), le module de traitement (18, 18a) permet de communiquer les données entre l'unité distante (200) et l'unité centrale (100) en se basant sur les informations du format de transmission.

2. Appareil (10, 10a) selon la revendication 1, dans lequel le premier ordre de modulation correspond à une modulation par déplacement de phase en quadrature et dans lequel le second ordre de modulation correspond à une modulation d'amplitude en quadrature à 64 états et dans lequel les premier et second formats de transmission correspondent à différentes granularités de quantification d'échantillons de données, dans lequel les premier et second formats de transmission diffèrent d'au moins un bit par échantillon quantifié.

3. Appareil (10, 10a) selon la revendication 1, dans lequel le module de commande (12, 12a) permet de déterminer, en tant qu'informations se rapportant à la propriété de données, des informations se rapportant à une qualité cible à obtenir pour les données qui doivent être communiquées entre l'unité distante (200) et l'unité centrale (100) et dans lequel le module de commande (12, 12a) permet de déterminer des informations se rapportant à différents formats de transmission en se basant sur les informations se rapportant à la qualité à obtenir.

4. Appareil (10, 10a) selon la revendication 1, dans lequel le module de commande (12, 12a) permet de déterminer, en tant qu'informations se rapportant à la propriété de données, des informations se rapportant à une qualité de service à obtenir pour les données qui doivent être communiquées entre l'unité distante (200) et l'unité centrale (100) et dans lequel le module de commande (12, 12a) permet de déterminer des informations se rapportant à différents formats de transmission en se basant sur les informations se rapportant à la qualité de service.

5. Appareil (10, 10a) selon la revendication 1, dans lequel le module de commande (12, 12a) permet de déterminer des informations se rapportant à une charge ou à une largeur de bande disponible sur la liaison de communication entre l'unité distante (200) et l'unité centrale (100) et dans lequel le module de commande (12, 12a) permet de déterminer des informations se rapportant à différents formats de transmission en se basant sur les informations se rapportant à la charge ou à la largeur de bande disponible.

6. Appareil (10, 10a) selon la revendication 5, dans lequel le module de commande (12, 12a) permet en outre de communiquer avec un planificateur de données de l'émetteur-récepteur de station de base (300) et dans lequel le module de commande (12, 12a) permet de fournir des informations se rapportant à une restriction d'ordre de modulation si une situation de surcharge est déterminée sur la liaison de communication entre l'unité distante (200) et l'unité centrale (100).

7. Appareil (10, 10a) selon la revendication 1, dans lequel le module de commande (12, 12a) permet de déterminer des informations se rapportant à une charge d'une cellule desservie par l'émetteur-récepteur de station de base (300) et dans lequel le module de commande (12, 12a) permet de déterminer des informations se rapportant à différents formats de transmission en se basant sur les informations se rapportant à la charge de la cellule.

8. Appareil (10, 10a) selon la revendication 1, dans lequel le module de commande (12, 12a) permet de déterminer des informations se rapportant à un concept de transmission radio - CoMP/no CoMP - utilisé entre un émetteur-récepteur mobile et l'émetteur-récepteur de station de base (300) et dans lequel le module de commande (12, 12a) permet de déterminer des informations se rapportant à différents formats de transmission en se basant sur les informations se rapportant au concept de transmission radio.

9. Unité distante (200) d'un émetteur-récepteur de station de base (300) comprenant l'appareil (10a) selon la revendication 1.

10. Unité centrale (100) d'un émetteur-récepteur de station de base (300) comprenant l'appareil (10) selon la revendication 1.

11. Procédé pour commander un format de transmission sur une liaison de communication entre une unité distante (200) et une unité centrale (100) d'un émetteur-récepteur de station de base (300) d'un système de communication mobile, le procédé comprenant :
la détermination (52) d'informations se rapportant à une propriété de données qui doivent être communiquées entre l'unité distante (200) et l'unité centrale (100) ;
la détermination (54) d'informations se rapportant à un format de transmission en se basant sur les informations se rapportant à la propriété des données ;
la détermination d'informations se rapportant à un premier ou à un second ordre de modulation des données en tant qu'informations se rapportant à la propriété des données, dans lequel le premier ordre de modulation est inférieur au second ordre de modulation ;
la détermination d'informations se rapportant à un premier format de transmission lorsque des informations se rapportant au premier ordre de modulation sont déterminées ;
la détermination d'informations se rapportant à un second format de transmission lorsque des informations se rapportant à la seconde modulation sont déterminées, dans lequel les informations se rapportant au premier format de transmission indiquent une résolution plus faible pour des échantillons I/Q communiqués entre l'unité distante (200) et l'unité centrale (100) que celle des informations se rapportant au second format de transmission ;
la détermination, en tant qu'informations se rapportant à la propriété de données, de si les données qui doivent être communiquées entre l'unité distante (200) et l'unité centrale (100) correspondent à des données de charge utile ou à des données de commande ;
la détermination d'informations se rapportant à la résolution des échantillons I/Q des formats de transmission correspondants selon que les données correspondent à des données de charge utile ou à des données de commande ;
la fourniture (56) des informations se rapportant au format de transmission ; et
la communication des données entre l'unité distante (200) et l'unité centrale (100) en se basant sur les informations du format de transmission.

12. Programme d'ordinateur ayant un code de programme pour réaliser le procédé selon la revendication 11, lorsque le programme d'ordinateur est exécuté sur un ordinateur, un processeur ou un composant matériel programmable.
